# EUROPEAN PATENT APPLICATION

(11) **EP 4 335 826 A1**
(43) Date of publication of application: **13.03.2024**
(21) Application number: 22194372.3
(22) Date of filing: 07.09.2022
(51) Int. Cl.: C02F 1/00, C02F 1/28, C02F 1/44, C02F 101/10, C02F 101/16

(54) **FILTER SET**

(71) Applicant: Seccua, GmbH, 86989 Steingaden (DE); Seccua Holding AG, 82362 Weiheim (DE)
(72) Inventor: FESTNER, Maria, 86956 Schongau (DE); BAITSCH, Michael, 82405 Wessobrunn (DE); HAMMERSTINGL, Andreas, 82405 Wessobrunn (DE); WÜNSCHE, Nadine, 86989 Steingaden (DE)
(74) Representative: Mann + Hummel Intellectual Property

(57) **Abstract**

A filter set (1) for water treatment in a water supply network (5) of a building (2), the water supply network (5) comprises a point of entry (6) where water enters the building (2) and at least one point of use (7, 19) where the water is used within the building (2). The filter set (1) comprises a first filter (3) configured to be arranged at the point of entry (6) to filter the water passing through the point of entry (6), and at least a second filter (4) configured to be arranged at the point of use (7, 19) to filter the water passing through the point of use (7, 19), wherein the first filter (3) is configured to filter the water at a first maximum flow rate and the second filter (4) is configured to filter the water at a second maximum flow rate, wherein the first maximum flow rate is higher than the second maximum flow rate, and the second filter (4) comprises an activated carbon unit (13, 23).

## Description

### Technical field

The present invention relates to water treatment in a water supply network of a building.

A water supply of a building usually comprises a point of entry where water enters the building and several points of use where water is used. Especially in older pipes of the water supply network comprising copper or lead, for example, such metals or corresponding ions can contaminate the water. Thus, the water quality at the points of use may be worse than the quality of the water entering the building. Depending on the type of point of use, e.g., a shower, a toilet or a tap, there may be different requirements regarding water quality, or a user wants to improve water quality at certain points of use. For example, when the user drinks water from the tap, the user prefers more purified water than for showering. A filter at the point of entry may protect the entire water supply network.

### Prior art

US 2003/0057155 A1 discloses a filter with an activated carbon tank and an ultrafiltration membrane for water treatment in residential or industrial buildings. The filter is arranged at the point of entry of the water supply network of the building, thus, protecting an entire house against impurities.

US 2003/0196955 A1 discloses a process to remove inorganic, organic and microbiological contaminants in a filter which can be arranged at the point of entry of the local water supply of a building. The filter comprises a pretreatment module, a posttreatment module, a recycle treatment module and a membrane module.

EP 1 998 876 B1 discloses a filtration unit for filtering a fluid. The filtration unit comprises at least one filtration membrane for filtering the fluid and is configured and dimensioned as a small scale system for the treatment of drinking water being dimensioned for the need of a household or a housing area.

### Disclosure of the invention

Against this background it is one object of the present invention to provide an improved filter set, a building with a filter set and/or a method for water treatment.

Accordingly, a filter set for water treatment in a water supply network of a building is disclosed. The water supply network comprises a point of entry where water enters the building and at least one point of use where the water is used within the building. The filter set comprises a first filter configured to be arranged at the point of entry to filter the water passing through the point of entry, and at least a second filter configured to be arranged at the point of use to filter the water passing through the point of use, wherein the first filter is configured to filter the water at a first maximum flow rate and the second filter is configured to filter the water at a second maximum flow rate, wherein the first maximum flow rate is higher than the second maximum flow rate.

The "filter set" may also be referred to as a "filter system".

The point of entry can be considered as the portion of the water supply network between an inlet point, where water enters the building and provides the water to the water supply network, and a first branch of the water supply network. Preferably, the first filter is arranged in flow direction behind a water meter, which is arranged at a distance to the inlet point, to measure the total water consumption inside the building. Preferably, the first filter filters all the water supplied to the building. In particular, the first filter applies a basic filtration (such as a decalcification, for example) to the water. The first (and/or second) filter may comprise one or more filter units providing different filter functions. Instead or in addition multiple first and/or second filters may be provided (which may be located together or spaced apart from each other).

The point of use may be a tap for a sink (in particular above or below the sink), a tap for a bathtub, a water connection to a household device, a shower faucet, or a toilet cistern, for example. When a cold-water supply and a warm-water supply provide water to the point of use, the second filter is preferably arranged after the point where the cold and warm water are mixed. The point of use may be a connection between the tap for a sink and a pipe of the water supply network to the tap. The connection may be located under the sink.

The first filter reduces particles and/or substances in the water which are not supposed to be in the water passing through all points of use. However, the second filter filters the particles and/or substances which should be filtered only at the point of use. When there are several points of use in a building, the filtered particles and/or substances may depend on different requirements regarding water quality or on the user's intention to improve the water quality at a particular point of use, for example.

The first maximum flow rate is provided at the point of entry where the first filter is arranged. The second maximum flow rate is provided at the point of use. For example, the second flow rate may depend on the type of point of use, e.g., the maximum water flow rate may be lower or higher in a shower faucet than in a tap for a bathtub.

The first maximum flow rate is defined as the flow rate of water flowing through the pipe of the point of entry when all points of use in the building are fully opened. The first maximum flow rate can also be based on a number of fully opened points of use, e.g., 2, 3, 4, 5, 6. The second maximum flow rate is defined as the flow rate of water passing through one fully opened point of use. The second maximum flow rate may vary for different points of use. The maximum flow rate in each case (first and/or second filter) may also be defined as the maximum flow rate at which the first and/or second filter still provides its intended functionality to a reasonable extent. This may, for example, be the case at a flow rate (termed maximum flow rate herein) where the first and/or second filter still filters out, depending on the type of filter, 80%, 90%, 95% or 98% of the particles and/or substances which it is intended to filter out and/or, e.g. in the case of a membrane filter, where the pressure difference at the membrane results in failure of the membrane. The ratio of the first maximum flow rate to the second maximum flow rate may be larger than 2, 3, 5 or 10.

It is an advantage that the second filter is arranged at the point of use. The second filter may be designed especially for the second maximum flow rate of each particular point of use. In the first filter, filter media with lower contact times are preferred, while in the second filter, filter media with longer contact times are preferred. Due to the lower second maximum flow rate the size of the second filter can be designed smaller and filter material can be saved compared to a configuration when the second filter would be arranged at the point of entry. The second filter may be configured to filter out dissolved substances, in particular.

In embodiments, the second filter comprises an activated carbon unit. The activated carbon unit may comprise granulated activated carbon, activated carbon filter blocks, activated carbon fleece, or other types of activated carbon filter elements, including combinations of activated carbon and hollow fibers.

Activated carbon can reduce residues of pesticides and pharmaceuticals in the water, for example.

In embodiments, the first filter comprises an ultrafiltration unit and/or a decalcification unit.

A decalcification unit presently reduces calcification in the water and/or reduces the (chemical) ability of the limescale to form deposits in household devices or in the bathroom, e.g., in showers, sinks, toilets and bathtubs.

The ultrafiltration unit reduces germs in the water. Thus, less biofilm is generated, e.g., at dead spots in the water supply network, e.g., at dead end pipes or at sharp pipe turns.

The ultrafiltration unit may be a membrane filter, the membrane having pores with a diameter between 10 and 20 nm, for example. The ultrafiltration unit may comprise one or more hollow fiber membranes. The membrane(s) may be made of, but not limited to, polymeric, such as PESM or PTFE, ceramic or ceramic composites, metals or metal alloys, or any other suitable material. Instead or in addition to the ultrafiltration unit, a hygiene unit may be used to filter out germs.

In embodiments, the filter set may comprise the first filter and the at least one second filter, wherein the first filter and the at least one second filter may each comprise one or more filtration units to provide a variety of filtration functions. The filter set may comprise the first filter comprising an ultrafiltration unit and/or a decalcification unit and the at least one second filter comprising an activated carbon unit.

In embodiments, the first maximum flow rate is 10 - 60 l/min and the second maximum flow rate is 0 - 10 l/min and/or a ratio of the first maximum flow rate to the second maximum flow rate is larger than 10.

In embodiments, the first filter comprises a first communication unit and the second filter comprises a second communication unit, wherein the first and second communication unit are configured to exchange data, by wire or wireless, with each other and/or with a control unit arranged in the building separate from the first and second filter.

Preferably, the user can communicate with the first and second filter. This enables the user to get access to filter data and water quality data, for example.

The control unit can be a Wi-Fi router or a mobile device (smart phone, tablet, etc.), for example.

The control unit can be arranged at the first filter, for example.

The wireless connection can be a Bluetooth or a Wi-Fi connection, for example.

In embodiments, the data to be exchanged includes information about water consumption and/or information about a filtration performance of the first and/or second filter and/or information about water quality.

Preferably, the data is visualized to the user via an app which is installed on the mobile device. The app can illustrate the water consumption or the water quality at each point of use, for example. Furthermore, the app can illustrate the filtration performance and can show the user when the filter and/or a filtration unit has to be exchanged or cleaned.

The filtration performance is defined as the ratio of the amount of a respective particle (e.g., germs etc.) or of a respective ion (or substance) in the water which has been purified by the filter to the amount of the respective particle (or ion or substance) in the non-purified water. As the filter is used up, the filtration performance is reduced until the filter and/or the filtration unit has to be exchanged or cleaned.

In embodiments, the first and/or second filter comprises a sensor configured to measure the water consumption.

In embodiments, the first and/or second filter comprises a sensor configured to measure the filtration performance of the first and second filter and to, based on the measured filtration performance, determine when the first and/or second filter have to be changed.

The first and second filter each comprise an inlet where water flows into the filter and an outlet where a more purified water flows out of the filter. The filtration performance is preferably determined by measuring and comparing the water quality at the inlet and at the outlet of the filter. If a difference of a water quality parameter reaches a predefined threshold value, the filter and/or the filtration unit has to be exchanged or cleaned. A water quality parameter may include the amount or concentration of a respective particle, ion or substance (e.g., ions, nitrate, nitrite, heavy metals, germs, pesticides, pharmaceuticals, lime etc.) in the water, e.g., at an inlet or at an outlet. The filtration performance may also be determined by measuring the water quality at the outlet of the filter.

In embodiments, the second filter comprises a filter configured to reduce arsenic in the water. The filter may be an iron oxide filter.

In embodiments, the second filter comprises a filter configured to reduce nitrate and nitrite in the water. The filter may be an ion exchange filter.

In embodiments, the first and/or second filter is configured to be extended by at least one filtration unit providing a filtration function different from the activated carbon unit, ultrafiltration unit and/or a decalcification unit.

The first and/or second filter are extendable by further filtration units. Thus, the filters can be adapted individually for each point of use to the local water quality or to the user's preferences, for example.

The first and/or second filter may comprise filtration units configured to reduce metals in the water, such as copper, lead, nickel, mercury, bismuth, iron, zinc, tin, silver, cadmium, chromium or uranium.

According to another aspect of this application, a building is disclosed comprising a water supply network and a filter set for water treatment in the water supply network. The water supply network comprises a point of entry where water enters the building and a point of use where the water is used within the building. The filter set comprises a first filter arranged at the point of entry to filter the water passing through the point of entry, and a second filter arranged at the point of use to filter the water passing through the point of use, wherein the first filter is configured to filter the water at a first maximum flow rate and the second filter is configured to filter the water at a second maximum flow rate, wherein the first maximum flow rate is higher than the second maximum flow rate.

In embodiments, the point of use is a tap associated with a sink, a bathtub and/or a shower faucet.

According to another aspect of this application, a method for water treatment in a water supply network of a building is disclosed. The water supply network comprises a point of entry where water enters the building and at least one point of use where the water is used within the building. In a first step, the water passing through the point of entry at a first maximum flow rate is filtered. In a second step, the water passing through the at least one point of use at a second maximum flow rate is filtered, wherein the first maximum flow rate is higher than the second maximum flow rate.

The units described herein, such as the control unit or the communication units of the first and second filter can be implemented by hardware and/or software. For example, the units can be implemented on a microprocessor together with associated storage means. The microprocessor with the storage means of the control unit and the first communication unit of the first filter can be provided on a central control device arranged at the first filter.

The embodiments and features described with reference to the filter set of the present invention apply mutatis mutandis to the building and to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### Short description of the drawings

The figures show:
- Fig. 1: a schematic view of a filter set in a building with one point of use;
- Fig. 2: a schematic view of the filter set in the building according to Fig. 1, but with two points of use;
- Fig. 3: a schematic view of a first filter of the filter set;
- Fig. 4: a schematic view of a second filter of the filter set, wherein the second filter is arranged at an outlet of a tap; and
- Fig. 5: steps of a method for water treatment in the building of Fig 1.

In the figures, identical and functionally identical elements have been given the same reference signs unless otherwise indicated.

### Embodiment(s) of the invention

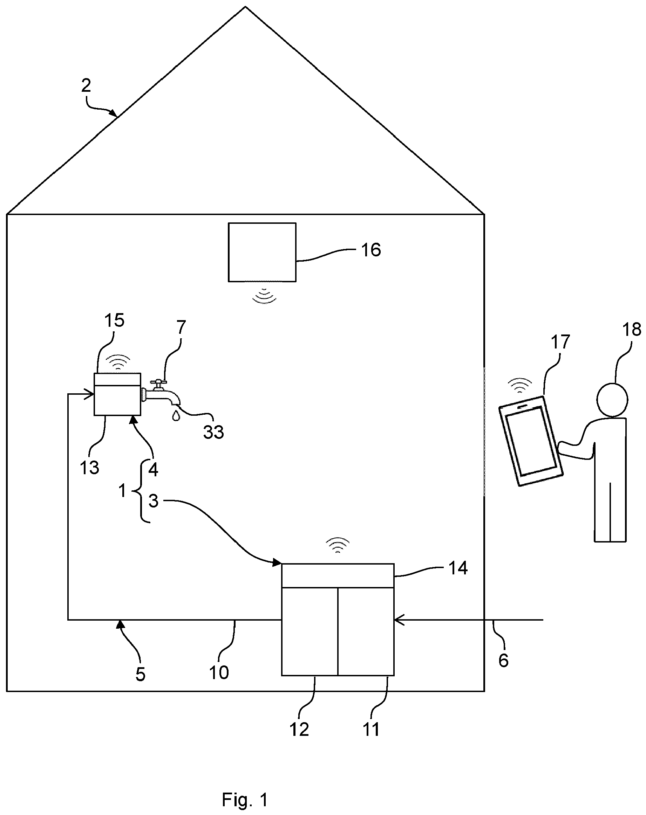

Fig. 1 shows a schematic view of a filter set 1 for water treatment arranged in a building 2. The filter set 2 comprises a first filter 3 and a second filter 4. The filter set 1 is described later in more detail.

The building 2 further comprises a water supply network 5 supplying water from a point of entry 6 to a point of use 7. The water supply network 5 comprises, for example, pipes and branches connecting the point of entry 6 with the point of use 7 so that the water can flow from the point of entry 6 to the point of use 7. The point of entry 6 is where water enters the building 2. The water can be municipal water or rainwater collected in a cistern. The maximum flow rate at the point of entry 6 is 10 - 60 l/min. The point of use 7 is where the water is used, e.g., a tap 7 for a sink, a tap for a bathtub, a shower faucet, or where a water-bearing household appliances like a washing machine or a dish washer are connected to the water supply network 5. The maximum flow rate at the point of use 7 is 0 - 10 l/min.

In the following, a configuration with one point of use 7 and the filter set 1 with two filters 3, 4 will be described. As shown in Fig. 1, the first filter 3 is arranged at the point of entry 6, in particular after a water meter (not shown) which measures the water consumption for the entire building 2.

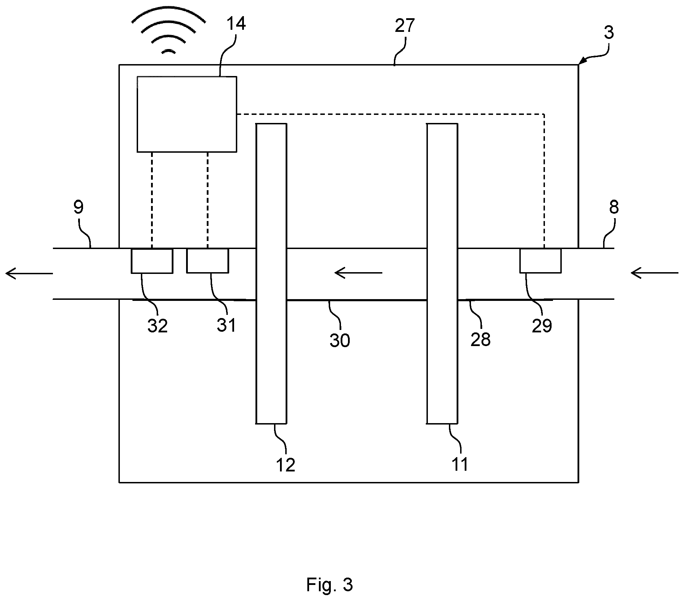

The first filter 3 comprises an inlet 8 (shown in Fig. 3) where water flows into the filter 3 and an outlet 9 (shown in Fig. 3) where water, purified by the first filter 3, exits the first filter 3 and flows towards the second filter 4 through a pipe 10 of the water supply network 5. The first filter 3 comprises a first filtration unit 11 and a second filtration unit 12. For example, the first filtration unit 11 is a decalcification unit reducing calcification in the water so that limescale deposits in the pipes of the water supply network 5, in household devices or in the bathroom, e.g., in showers, sinks, toilets and bathtubs, can be reduced. The second filtration unit 12 of the first filter 3, for example, is an ultrafiltration unit reducing germs in the water so that no biofilm is generated at dead spots in the water supply network 5, e.g., at dead end pipes or at sharped pipe turns.

As illustrated in Fig. 1, the second filter 4 is arranged at the point of use 7 before the water enters the tap 7. Like the first filter 3, the second filter 4 comprises an inlet (not shown) where water enters the filter 4 and an outlet (not shown) where purified water exits the filter 4. The second filter 4 comprises a filtration unit 13 which is an activated carbon unit, for example. The activated carbon unit 13 reduces residues of pesticides and pharmaceuticals in the water, for example. The activated carbon unit 13 can further reduce heavy metals, such as copper, lead, nickel, mercury, bismuth, iron, zinc, tin, silver, cadmium, chromium or uranium. The carbon unit 13 may include multiple filter stages.

As further illustrated in Fig. 1, the first filter 3 comprises a first communication unit 14 and the second filter 4 comprises a second communication unit 15. The first and second communication unit 14, 15 are able to communicate with a control unit 16 which is located in the building 2 by wire or a wireless connection. The first and second communication unit 14, 15 and/or the control unit 16 are able to communicate with each other and/or with a mobile device 17 of a user 18. The communication includes the transfer of data about water consumption and/or information about a filtration performance of the first and second filter 3, 4 and/or information about water quality. The data about water consumption may include the daily, weekly or annual water consumption at the point of use 7. For example, when the water supply network comprises a shower, a tap for a sink in a kitchen and in a bathroom, the user can obtain data about the individual water consumption of the shower, the tap for the sink in the kitchen and in the bathroom. The information about the filtration performance may include the remaining lifetime of the first and second filter 3, 4 and also the point in time, when the first and second filter 3, 4 have to be exchanged or cleaned.

In another embodiment, the control unit 16 is a Wi-Fi router and the first and second communication unit 14, 15 are connected with the Wi-Fi router 16 and transfer the data to the mobile device 17 of the user 18.

In another embodiment, the control unit 16 can be omitted so that the second communication unit 15 is able to communicate directly with the first communication unit 14 of the first filter 3, e.g., by a Bluetooth connection and transfer data to the first communication unit 14. The first communication unit 14 is able to communicate with the mobile device 17, e.g., by a Bluetooth connection. Thus, the data relating to the first filter 3 can be transferred directly to the mobile device 17 and the data relating to the second filter 4 can be transferred via the first communication unit 14 to the mobile device 17.

In another embodiment, the control unit 16 and the first and second communication unit 14, 15 can be omitted so that no communication between the first and second filter 3, 4 and between the mobile device 17 is possible.

In the following, another embodiment is described where the building 2 comprises two points of use.

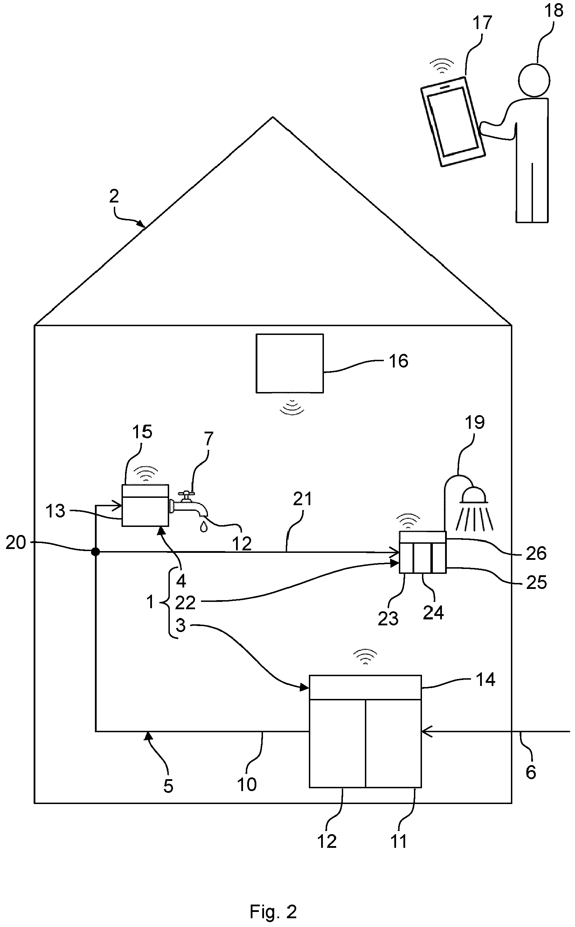

Fig. 2 shows a schematic view of the filter set 1 according to Fig. 1, but for two points of use in the building 2. The water supply network 5 supplies water to the first point of use 7 and also to a second point of use 19, which is a shower faucet, for example. The water supply network 5 is not limited to two points of use 7, 19 and may also comprise more points of use. The water supply network 5 in Fig. 2 comprises a junction 20, which is arranged after the first filter 3, and a pipe 21 connecting the junction 20 with the shower faucet 19 so that water can flow from the outlet 9 of the first filter 3 to the shower faucet 19. To purify the water, which is supplied to the shower faucet 19, a third filter 22 is arranged at the pipe 21. Thus, the filter set 1 includes now the first, the second and the third filter 3, 4, 22. The third filter 22 may also be arranged at the outlet (not shown) of the shower faucet 19.

The size of the first filter 3 is increased since it has to filter the water flow rate when both points of use 7, 19 are fully opened allowing the maximum water flow rate passing through the points of use 7, 19.

Like the first and second filter 3, 4, the third filter 22 comprises an inlet (not shown) where water enters the filter 22 and an outlet (not shown) where purified water exits the filter 22. The third filter 22 comprises a first, second and third filtration unit 23, 24, 25 to further purify the water. The first filtration unit 23 may be an ion exchange filter, the second filtration unit 24 may be an iron oxide filter and the third filtration unit 25 may an activated carbon filter for providing a neutral smell and taste of the water. The filtration units 23 - 25 can also be of different filtration types depending on the quality of the municipal or rainwater or the local quality at the point of use 7, 19. For example, the material of the water supply network can affect the water quality. The filters 3, 4 and 22 can be extended by more filtration units (thus providing a modular system) to reduce more particles. The filtration units 11, 12, 13, 23 - 25 can provide a filtration function different from the activated carbon unit 13, ultrafiltration unit 12 or the decalcification unit 11.

The third filter 22 further comprises a third communication unit 26. The features of the first and second communication units 14, 15 apply mutatis mutandis to the third communication unit 26.

In another embodiment, each filtration unit 11, 12, 13, 23 - 25 is accommodated in a housing (not shown) with an inlet (not shown) and an outlet (not shown). The housings of the filtration units 11, 12, 13, 23 - 25 can be connected in a row by connecting the inlet of one housing of a filtration unit 11, 12, 13, 23 - 25 with the outlet of another housing of another filtration unit 11, 12, 13, 23 - 25, e.g., by plug clutches. One or more of the filtration units 11, 12, 13, 23 - 25 may be accommodated in a housing (not shown) of the respective first, second or third filter 3, 4, 22.

In another embodiment, the third filter comprises, for example, three slots (not shown) each having an inlet and an outlet, so that water can flow through the slot. The slot can be a frame, in which one filtration unit is accommodated. Depending on the user's preferences or on the water quality, different filtration units can be plugged releasably into the slots.

In the following, the setup of the first filter 3 is described which also applies mutatis mutandis to the second and third filter 4, 22.

Fig. 3 illustrates a schematic view of the first filter 3 of the filter set 1. Optionally, the first filter 3 comprises a housing 27 accommodating elements of the first filter 3. The housing 27 comprises an inlet 8 where the water enters the first filter 3 and an outlet 9 where the water exits the first filter 3. The inlet 8 is connected to the first filtration unit 11, which may be a decalcification unit, via a pipe 28. In the pipe 28, a sensor 29 is located to measure the water quality at the inlet 8. The sensor 29 is connected (dashed line in Fig. 3) to the first communication unit 14 to transfer data to the communication unit 14. The decalcification unit 11 is connected to the ultrafiltration unit 12 so that the water coming from the decalcification unit 11 flows to the ultrafiltration unit 12. The ultrafiltration unit 12 is connected to the outlet 9 via a pipe 30. Inside the pipe 30, a sensor 31 is located to measure the water quality at the outlet 9 and a sensor 32 is located to measure the water flow rate, thus the water consumption inside the building can be determined. Both sensors 31, 32 are connected (dashed lines in Fig. 3) to the first communication unit 14 to transfer data to the communication unit 14.

The water quality sensors 29, 31 measure parameters such as concentrations of heavy metals, germs, nitrate, nitrite, pesticides, pharmaceuticals, or lime. By comparing the values measured at the inlet 8 and the outlet 9, the filtration performance can be determined. The sensor 31 may also be a pressure sensor to measure the water pressure in the pipe 30 to determine whether the first filter 3, decalcification unit 11 or the ultrafiltration unit 12 are blocked.

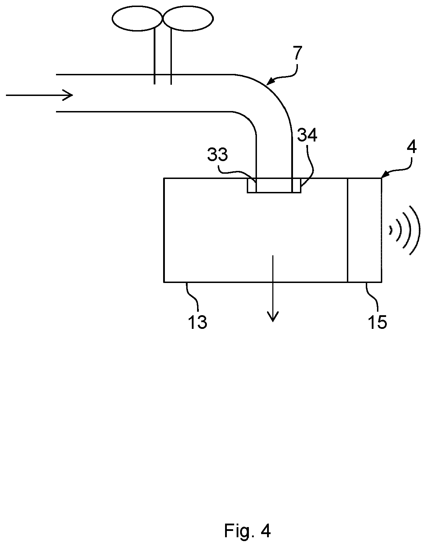

In another embodiment, the second filter 4 is arranged at an outlet 33 of the tap 7 where the water exits the tap 7, as shown in Fig. 4. The outlet 33 comprises a screw thread 34 to which the second filter 4 can be screwed, for example.

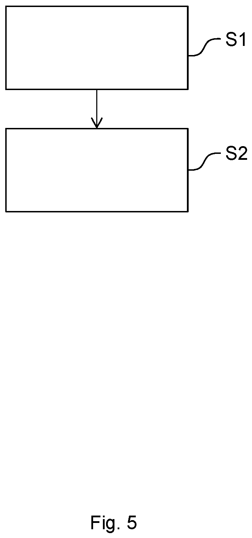

Fig. 5 illustrates steps of a method for water treatment in a water supply network 5 for a building 2. The water supply network 5 comprises a point of entry 6 where water enters the building 2 and at least one point of use 7 where water is used within the building 2. In a first step S1, the water passing through the point entry 6 at a first maximum flow rate is filtered. In a second step S2, the water passing through the point of use 7 at a second maximum flow rate is filtered, wherein the first maximum flow rate is higher than the second maximum flow rate.

### Reference signs:

- 1: filter set
- 2: building
- 3: filter
- 4: filter
- 5: water supply network
- 6: point of entry
- 7: tap
- 8: inlet
- 9: outlet
- 10: pipe
- 11: decalcification unit
- 12: ultrafiltration unit
- 13: activated carbon unit
- 14: communication unit
- 15: communication unit
- 16: control unit
- 17: mobile device
- 18: user
- 19: shower facet
- 20: junction
- 21: pipe
- 22: filter
- 23: activated carbon unit
- 24: iron oxide filter
- 25: ion exchange filter
- 26: communication unit
- 27: housing
- 28: pipe
- 29: sensor
- 30: pipe
- 31: sensor
- 32: sensor
- 33: outlet
- 34: screw thread

## Claims

1. A filter set (1) for water treatment in a water supply network (5) of a building (2), the water supply network (5) comprising a point of entry (6) where water enters the building (2) and at least one point of use (7, 19) where the water is used within the building (2), comprising: a first filter (3) configured to be arranged at the point of entry (6) to filter the water passing through the point of entry (6), and at least a second filter (4) configured to be arranged at the point of use (7, 19) to filter the water passing through the point of use (7, 19), wherein the first filter (3) is configured to filter the water at a first maximum flow rate and the second filter (4) is configured to filter the water at a second maximum flow rate, wherein the first maximum flow rate is higher than the second maximum flow rate, and the second filter (4) comprises an activated carbon unit (13, 23).

2. The filter set (1) according to claim 1, wherein the first filter (3) comprises an ultrafiltration unit (12) and/or a decalcification unit (11).

3. The filter set (1) according to claim 1 or 2, wherein the first maximum flow rate is 10 - 60 l/min and the second maximum flow rate is 0 - 10 l/min and/or a ratio of the first maximum flow rate to the second maximum flow rate is larger than 2, 3, 5 or 10.

4. The filter set (1) according to any one of claims 1 - 3, wherein the first filter (3) comprises a first communication unit (14) and the second filter (4) comprises a second communication unit (15), wherein the first and second communication unit (14, 15) are configured to exchange data, by wire or wireless, with each other and/or with a control unit (16) arranged in the building (2) separate from the first and second filter (3, 4).

5. The filter set (1) according to claim 4, wherein the data to be exchanged includes information about water consumption and/or information about a filtration performance of the first and second filter (3, 4) and/or information about water quality.

6. The filter set (1) according to claim 5, wherein the first and/or second filter (4) comprises a sensor (32) configured to measure the water consumption.

7. The filter set (1) according to claim 5 or 6, wherein the first and/or second filter (4) comprises a sensor (29, 31) configured to measure the filtration performance of the first and second filter (3, 4) and to, based on the measured filtration performance, determine when the first and/or second filter (3, 4) have to be changed.

8. The filter set (1) according to any one of claims 1 - 7, wherein the second filter is configured to reduce arsenic in the water.

9. The filter set (1) according to any one of claims 1 - 8, wherein the second filter (4) is configured to reduce nitrate and nitrite in the water.

10. The filter set (1) according to any one of claims 1 - 9, wherein the first and/or second filter (3, 4) is configured to be extended by at least one filtration unit (11, 12, 13, 23 - 25) providing a filtration function different from the activated carbon unit (13, 23), ultrafiltration unit (12) and/or a decalcification unit (11).

11. A building (2) comprising a water supply network (5) and a filter set (1) for water treatment in the water supply network (5), the water supply network (5) comprising a point of entry (6) where water enters the building (2) and a point of use (7, 19) where the water is used within the building (2), wherein the filter set (1) comprises a first filter (3) arranged at the point of entry (6) to filter the water passing through the point of entry (6), and a second filter (4) arranged at the point of use (7, 19) to filter the water passing through the point of use (7, 19), wherein the first filter (3) is configured to filter the water at a first maximum flow rate and the second filter (4) is configured to filter the water at a second maximum flow rate, wherein the first maximum flow rate is higher than the second maximum flow rate, and the second filter (4) comprises an activated carbon unit (13, 23).

12. The building (2) according to claim 11, wherein the point of use (7, 19) is a tap (7) associated with a sink, a bathtub and/or a shower faucet (19).

13. A method for water treatment in a water supply network (5) of a building (2), the water supply network (5) comprising a point of entry (6) where water enters the building (2) and at least one point of use (7, 19) where the water is used within the building (2), comprising the following steps:
a) filtering (S1), using a first filter (3), the water passing through the point of entry (6) at a first maximum flow rate, and
b) filtering (S2), using a second filter (4), the water passing through the at least one point of use (7, 19) at a second maximum flow rate,
wherein the first maximum flow rate is higher than the second maximum flow rate and wherein the second filter (4) comprises an activated carbon unit (13, 23).
